# EUROPÄISCHE PATENTANMELDUNG

(11) **EP 2 469 245 A1**
(43) Veröffentlichungstag der Anmeldung: **27.06.2012**
(21) Anmeldenummer: 10015941.7
(22) Anmeldetag: 22.12.2010
(51) Int. Cl.: G01F 23/14

(54) **Füllstandmessgerät**

(71) Anmelder: VEGA Grieshaber KG, 77709 Wolfach (DE)
(72) Erfinder: Jörn, Jacob, 77709 Kirnbach (DE)
(74) Vertreter: Patentanwälte Westphal, Mussgnug & Partner

(57) **Zusammenfassung**

Füllstandmessgerät mit einem Gehäuse und einer in dem Gehäuse angeordneten Messzelle, wobei die Messzelle einen im wesentlichen zylindrisch aufgebauten Messzellenkörper, der eine quer zu einer Längsachse des Messzellenkörpers angeordnete Membran aufweist, wobei die Messzelle über ein umfänglich verlaufendes und zwischen dem Messzellenkörper und dem Gehäuse angeordnetes Dichtorgan in dem Gehäuse gehaltert ist, wobei das Dichtorgan in Axialrichtung des Messzellenkörpers derart angeordnet ist, dass ein von der Messzelle ausgegebenes Messsignal unabhängig von einer Kompression des Dichtorgans ist.

## Beschreibung

Die vorliegende Erfindung betrifft ein Füllstandmessgerät gemäß dem Oberbegriff des Patentanspruchs 1.

Derartige Füllstandsmessgeräte sind aus dem Stand der Technik bekannt und weisen ein im Wesentlichen zylinderförmig ausgebildetes Gehäuse auf, in dem vorderseitig in Richtung einer Prozessumgebung, eine Messzelle angeordnet ist. Die Messzelle weist einen im Wesentlichen zylindrisch aufgebauten Messzellenkörper auf, der in der Regel vorderseitig eine quer zu einer Längsachse des Messzellenkörpers angeordnete Membran aufweist. Die Messzelle ist über ein umfänglich verlaufendes und zwischen dem Messzellenkörper und dem Gehäuse angeordnetes Dichtorgan in dem Gehäuse des Füllstandmessgeräts gehaltert.

Um eine ausreichende Dichtigkeit des Füllstandmessgeräts zu erlangen ist es notwendig, dass das Dichtorgan, das beispielsweise als O-Ring ausgebildet sein kann, komprimiert wird um so eine Dichtwirkung zu entfalten. Durch die Kompression des Dichtorgans werden in die Messzelle Kräfte in radialer Richtung eingeleitet, die abhängig von der herrschenden Umgebungstemperatur, die maßgeblichen Einfluss auf eine Ausdehnung des Dichtorgans hat, variieren. Durch eine solche Variation der eingeleiteten Kräfte wird ein Ausgangssignal der Messzelle verfälscht.

Bislang wird versucht eine durch die Verspannung sowie Temperaturschwankungen hervorgerufene Messsignaländerung dadurch gering zu halten, dass das Dichtorgan möglichst weit hinter der Glasnaht, der Fügestelle zwischen der Membran und dem Messzellenkörper, platziert wird. Bei einer Messzelle mit einer Erstreckung von etwa 10 mm wurde daher das Dichtorgan mit einem Abstand von 5 mm zu der Fügestelle nach hinten versetzt angeordnet. Zusätzlich wurde außerdem versucht thermisch bedingte Volumenänderungen des Dichtorgans durch eine geringere Vorspannung desselben nur in geringerem Maße in den Messzellenkörper einzuleiten. Eine geringere Vorspannung des Dichtorgans hat zwar eine geringere temperaturabhängige Nullpunktverschiebung des Messsignals zur Folge, hat aber gleichzeitig negative Auswirkungen auf eine Langzeitdichtigkeit der Messzelle. Mit zunehmender Alterung des Dichtorgans nimmt außerdem in der Regel dessen Elastizität und damit eine Vorspannkraft zwischen dem Gehäuse und dem Messzellenkörper ab, sodass eine weitere Verschiebung des Nullpunktes der Messzelle zu erwarten ist. Eine Messgenauigkeit der bekannten Füllstandmessgeräte ist damit ebenfalls durch die Alterung der Dichtorgane begrenzt.

Es ist die Aufgabe der vorliegenden Erfindung die oben beschriebenen Nachteile zu beheben und eine thermisch stabile Anordnung mit ausreichender Langzeitstabilität zur Verfügung zu stellen.

Diese Aufgabe wird gelöst durch ein Füllstandmessgerät mit den Merkmalen des Patentanspruchs 1.

Ein derartiges Füllstandmessgerät weist ein Gehäuse und eine in dem Gehäuse angeordnete Messzelle auf, wobei die Messzelle eine im Wesentlichen zylindrisch aufgebauten Messzellenkörper hat, der eine quer zu einer Längsachse des Messzellenkörpers angeordnete Membran aufweist und wobei die Messzelle über ein umfänglich verlaufendes und zwischen dem Messzellenkörper und dem Gehäuse angeordnetes Dichtorgan in dem Gehäuse gehaltert ist. Erfindungsgemäß ist das Dichtorgan in Axialrichtung des Messzellenkörpers derart angeordnet, dass ein von der Messzelle ausgegebenes Messsignal unabhängig von einer Kompression des Dichtorgans ist.

Durch eine erfindungsgemäße Anordnung des Dichtorgans am Umfang des Messzellenkörpers mit einem, beispielsweise durch Simulation oder empirische Auswertung bestimmbaren Abstand von einer Fügestelle zwischen der Membran und dem Messzellenkörper ist es möglich, ein Ausgangssignal der Messzelle weitgehend von einer radialen Krafteinwirkung, die durch eine Kompression des Dichtorgans hervorgerufen wird, zu entkoppeln. So wird auf diese Weise erreicht, dass unabhängig von einer Einspannung der Messzelle durch das Dichtorgan ein stabiler Nullpunkt der Messzelle gewährleistet ist. Die erzielten Messergebnisse des Füllstandmessgerätes sind damit unabhängig von einer temperaturabhängigen Ausdehnung des Dichtorgans sowie von einer altersbedingten Abnahme der Spannkraft desselben. Es kann damit eine erhöhte Dichtigkeit des Füllstandmessgerätes, eine erhöhte Langzeitstabilität des Gerätes an sich sowie eine erhöhte Messpräzision erreicht werden.

Ein besonders kostengünstiger Aufbau des Füllstandmessgerätes sowie eine gleichzeitig zuverlässige Lagerung der Messzelle im Inneren des Gehäuses wird erreicht, wenn als Dichtorgan ein O-Ring zum Einsatz kommt. Grundsätzlich sind aber auch Formdichtungen als Dichtorgan denkbar.

Um eine bessere Verspannung des Dichtorgans zu erreichen und es gleichzeitig vor mechanischen Einflüssen aus Richtung einer Prozessumgebung zu schützen ist es vorteilhaft, wenn das Gehäuse vorderseitig einen umlaufenden Vorsprung aufweist. Der Vorsprung ist bevorzugt kragenförmig ausgebildet und erstreckt sich in radialer Richtung.

Auf diese Weise wird gewährleistet, dass dadurch, dass das Dichtorgan unter diesem umlaufenden Vorsprung angeordnet ist, eine Beschädigung aus Richtung der Prozessumgebung verhindert wird und gleichzeitig unterbunden wird, dass das Dichtorgan in Richtung der Prozessumgebung bei schwankenden Drücken abgesaugt wird.

Es ist vorteilhaft, wenn die Messzelle rückseitig und umfänglich zusätzlich durch einen Haltering gelagert ist.

Ein solcher Haltering kann beispielsweise mit dem Gehäuse verschraubbar ausgebildet und rückseitig mit einer umlaufenden Schulter zur Abstützung der Messzelle ausgebildet sein. Um eine erhöhte Dichtigkeit der Anordnung zu erreichen und eine stabilere Lagerung der Messzelle zu gewährleisten ist es vorteilhaft, wenn der Haltering derart ausgebildet ist, dass er das Dichtorgan rückseitig mit einem Druck beaufschlagt.

Der Haltering kann dazu beispielsweise einen Kompressionsabschnitt aufweisen, der den Haltering in Richtung des Dichtorgans verlängert, sodass beim Einsetzen des Halterings das Dichtorgan in axialer Richtung, d. h. in Richtung des umlaufenden Vorsprungs des Gehäuses komprimiert wird. Auf diese Weise wird eine zusätzliche Kraftwirkung in Radialrichtung des Messzellengehäuses erreicht.

Die vorliegende Erfindung ist besonders vorteilhaft, wenn die Messzelle eine kapazitive Messzelle aus keramischem Material ist.

Die Erfindung wird nachfolgend unter Bezugnahme auf die beiliegenden Figuren ausführlich erläutert.

Es zeigen:
- Fig. 1: einen geteilten Querschnitt, wobei rechts ein Füllstandmessgerät gemäß dem Stand der Technik und links ein erfindungsgemäßes Füllstandmessgerät gezeigt ist,
- Fig. 2: eine vergrößerte Darstellung der Messzelle in Form einer FEM-Simulation,
- Fig. 3: eine Messwerttabelle zum Vergleich einer Messzelle gemäß dem Stand der Technik und einer erfindungsgemäßen Messzelle,
- Fig. 4: eine Kennliniendarstellung der Abhängigkeit der Nullpunktabweichung der Messzelle abhängig von einer axialen Einbautiefe des Dichtorgans.

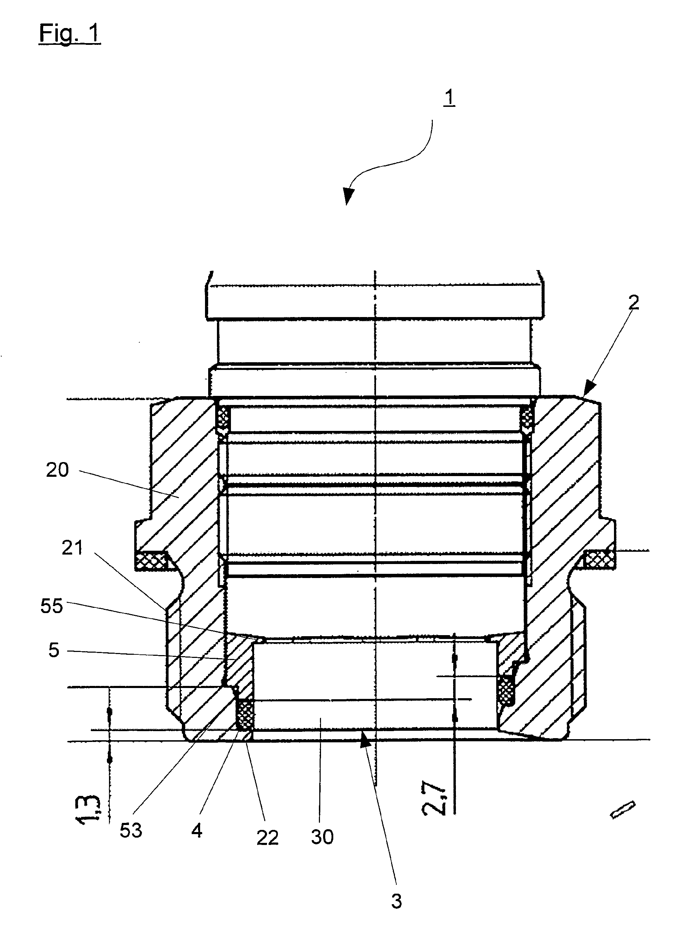

Figur 1 zeigt einen geteilten Querschnitt eines Füllstandmessgeräts 1, wobei in der rechten Hälfte des Querschnitts ein Füllstandmessgerät 1 gemäß dem Stand der Technik und in der linken Hälfte des Querschnitts ein erfindungsgemäßes Füllstandmessgerät 1 gezeigt ist.

Das Füllstandmessgerät 1 gemäß dem Stand der Technik und das erfindungsgemäße Füllstandmessgerät 1 sind im Wesentlichen gleich aufgebaut und unterscheiden sich im gezeigten Querschnitt im Wesentlichen durch die Anbringung eines Dichtorgans 4 in unterschiedlicher Einbautiefe. Aus diesem Grund wird im Folgenden lediglich auf das erfindungsgemäße Füllstandmessgerät 1 eingegangen.

Das Füllstandmessgerät 1 weist ein im Wesentlichen zylindrisch aufgebautes Gehäuse 2 mit einem Gehäusekörper 20 auf, der vorderseitig ein Außengewinde zum Einschrauben des Füllstandmessgerätes 1 in beispielsweise einen Tank oder eine Rohrleitung aufweist. Hinter dem Außengewinde 21 ist ein Absatz zur Begrenzung einer Einschraubtiefe des Gehäuses 2 vorgesehen, der mit einer umlaufenden Formdichtung gleichzeitig eine Dichtigkeit des Gehäuses 2 in Bezug auf eine Prozessumgebung gewährleistet.

Im Inneren des Gehäuses 2 ist eine Messzelle 3 angeordnet. Die Messzelle 3 weist einen zylindrisch ausgebildeten Messzellenkörper 30 auf, an dem vorderseitig eine Membran 32 zur Aufnahme und Weiterleitung eines in der Messumgebung herrschenden Drucks auf. Die Membran 32 ist senkrecht zu einer Längsachse des Messzellenkörpers 30 angeordnet und an ihrem Umfang mit dem Messzellenkörper verbunden.

Der Messzellenkörper 30 ist im Inneren des Gehäusekörpers 20 über ein Dichtorgan 4, das zwischen dem Messzellenkörper 30 und dem Gehäusekörper 20 angeordnet ist, gelagert. Das Dichtorgan 4 ist im vorliegenden Beispiel als O-Ring ausgebildet. Der O-Ring 4 ist vorderseitig durch einen umlaufenden Vorsprung 22, der an dem Gehäusekörper 20 vorderseitig angeformt ist abgestützt und vor Einflüssen aus der Prozessumgebung geschützt. Von der Rückseite her wird die Messzelle 3 über einen Haltering 5, der in den Gehäusekörper 20 einschraubbar ist, zusätzlich gelagert und über einen umlaufenden Stützabschnitt 55 rückseitig gelagert. Vorderseitig weist der Haltering 5 einen Kompressionsabschnitt 53 auf, der den Haltering 5 in Richtung des O-Rings 4 verlängert und bei einem Einschrauben des Halterings 5 in den Gehäusekörper 20 einen zusätzlichen Druck auf den O-Ring 4 in Richtung des Vorsprungs 22 ausübt. Durch eine Kompression des O-Rings 4 in Axialrichtung wird eine zusätzliche Spannkraft in Radialrichtung des Messzellenkörpers 30 erreicht, sodass eine erhöhte Dichtwirkung erreicht wird. Der O-Ring 4 ist in axialer Richtung der Messzelle 3 derart angeordnet, dass eine in Radialrichtung durch den O-Ring 4 in Radialrichtung der Messzelle 3 eingeleitete Kraft keine Auswirkung auf ein Messergebnis der Messzelle hat. Das wird dadurch erreicht, dass der O-Ring 4 derart angeordnet ist, dass die radial gerichtete Kraft an einem Punkt in das Gehäuse eingeleitet wird, an dem keine Kraftwirkung auf die mit dem Messzellenkörper 30 verbundene Membran 32 erzeugt wird. Die Membran erfährt dadurch keine Durchbiegungskomponente, die von dieser Kraftwirkung abhängig ist.

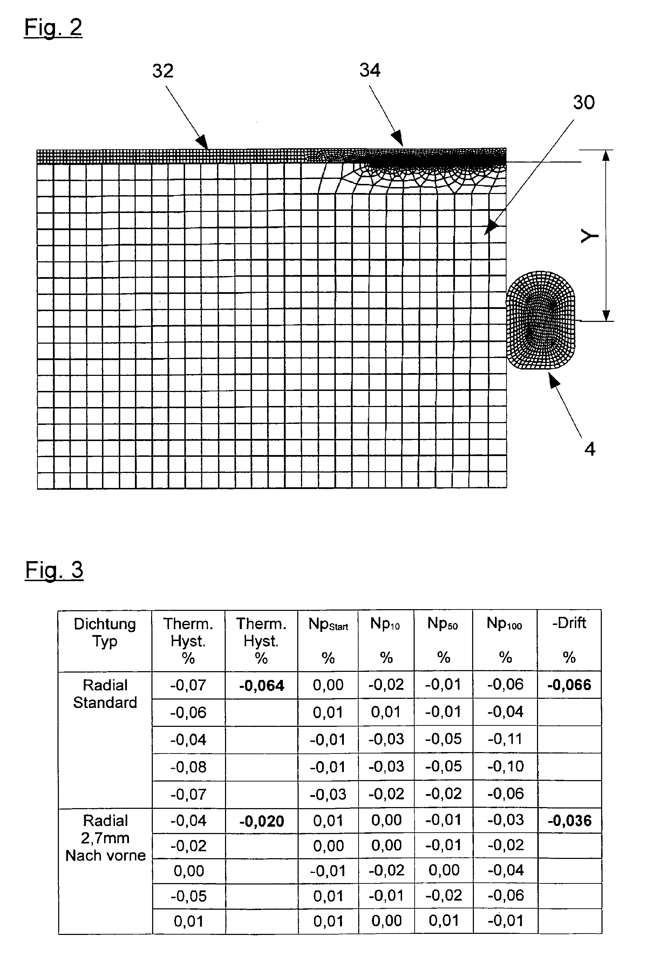

Figur 2 zeigt eine vergrößerte Darstellung der Messzelle 3 aus Figur 1, wobei die Messzelle 3 in der vorliegenden Darstellung um 180° gedreht, d. h. mit der Membran 32 nach oben ausgerichtet dargestellt ist.

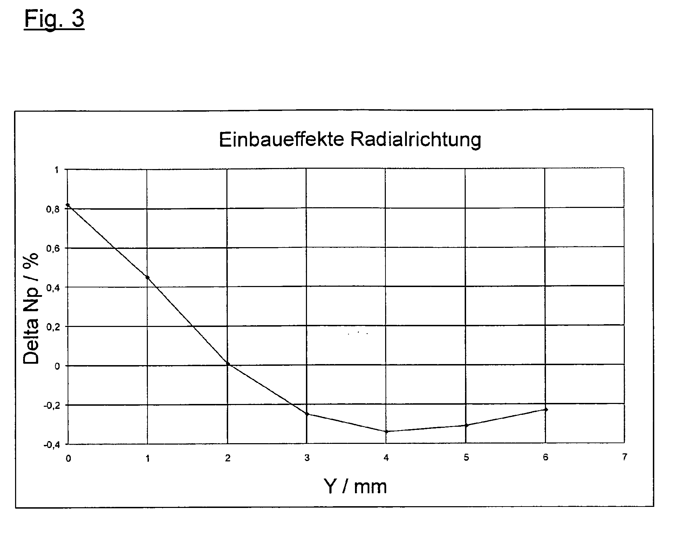

Die vorliegende Darstellung ist Ausschnitt einer Finite-Elemente-Simulation der eingespannten Messzelle 3, wobei das Dichtorgan 4 im Sinne der Erfindung optimal angeordnet ist. Ein axialer Abstand Y des Dichtorgans 4 von der Membran 32 ist also so gewählt, dass radial wirkende Kräfte, die durch das Dichtorgan 4 in den Messzellenkörper 30 eingeleitet werden, keine Auswirkung auf eine Durchbiegung der Membran 32 haben, und so ein stabiler Nullpunkt der Messzelle 3 und damit eine stabile Messkurve gewährleistet ist. In Figur 3 ist eine Tabelle mit Messwerten von jeweils 5 Füllstandmessgeräten 1 gemäß dem Stand der Technik und gemäß der vorliegenden Erfindung gezeigt. Dargestellt ist die prozentuale Nullpunktverschiebung abhängig von einer Anzahl durchgeführter 0° bis 100°C Temperaturzyklen. Während zum Zeitpunkt Np_{Start} noch kein signifikanter Unterschied zwischen den Füllstandmessgeräten 1 gemäß dem Stand der Technik (bezeichnet mit radial Standard) und den erfindungsgemäßen Füllstandmessgeräten 1 (bezeichnet mit radial 2,7 mm nach vorne) zu erkennen ist, ist bereits nach 10 absolvierten Temperaturzyklen erkennbar, dass eine erfindungsgemäße Anordnung des O-Rings 4 eine signifikante Verringerung der Nullpunktabweichung bewirkt. Die durchschnittliche Nullpunktabweichung nach 100 absolvierten Temperaturzyklen konnte durch eine erfindungsgemäße Anordnung des O-Rings 4 um annähernd 50% im Vergleich zum Stand der Technik reduziert werden.

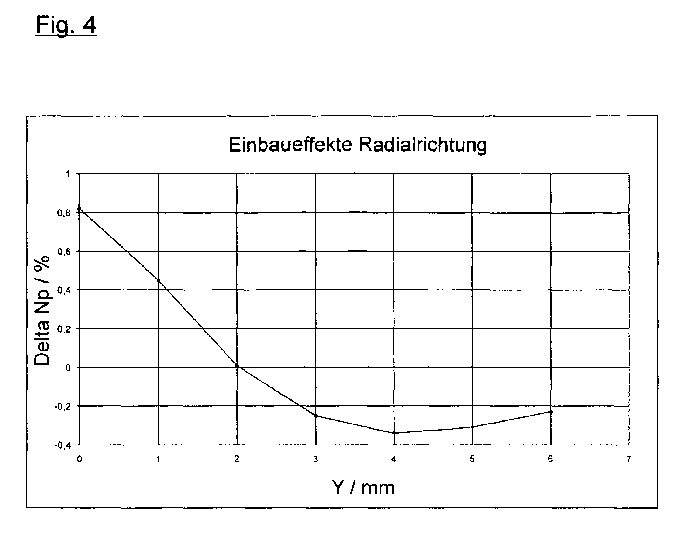

Figur 4 zeigt in einer Kennlinie die Abhängigkeit der Nullpunktverschiebung (Delta Np) von der Einbautiefe Y des Dichtorgans 4.

In der dargestellten Kennlinie ist zu erkennen, dass, abhängig von der Einbautiefe y eine Nullpunktabweichung sowohl in positive als auch negative Richtung erfolgt. Im vorliegenden Beispiel ist eine optimale Einbautiefe für das Dichtorgan 4 bei Y = 2 mm gegeben. Bei dieser Einbautiefe y ist eine minimale Nullpunktverschiebung gegeben, sodass eine optimale Temperatur und Langzeitstabilität des Füllstandmessgeräts erreicht werden kann.

### Bezugszeichenliste

- 1: Füllstandmessgerät
- 2: Gehäuse
- 3: Messzelle
- 4: Dichtorgan
- 5: Haltering

- 20: Gehäusekörper
- 21: Außengewinde
- 22: Rand
- 23: Schalter
- 24: Innengewinde

- 30: Messzellenkörper
- 32: Membran
- 34: Fügestelle/Schweißnaht
- 36: Neutraler Punkt

- 51: Außengewinde
- 53: Kompressionsabschnitt
- 55: Stützabschnitt

- y: Abstand / Einbautiefe

## Patentansprüche

1. Füllstandmessgerät (1) mit einem Gehäuse (2) und einer in dem Gehäuse (2) angeordneten Messzelle (3), wobei die Messzelle (3) einen im wesentlichen zylindrisch aufgebauten Messzellenkörper (30), mit einer quer zu einer Längsachse des Messzellenkörpers (30) angeordneten Membran (32) aufweist, wobei die Messzelle (3) über ein umfänglich verlaufendes und zwischen dem Messzellenkörper (30) und dem Gehäuse (2) angeordnetes Dichtorgan (4) in dem Gehäuse (2) gehaltert ist,
**dadurch gekennzeichnet, dass** das Dichtorgan (4) in Axialrichtung des Messzellenkörpers (30) derart angeordnet ist, dass ein von der Messzelle (3) ausgegebenes Messsignal unabhängig von einer Kompression des Dichtorgans (4) ist.

2. Füllstandmessgerät (1) nach Anspruch 1,
**dadurch gekennzeichnet, dass** das Dichtorgan (4) als O-Ring ausgebildet ist.

3. Füllstandmessgerät (1) nach einem der vorhergehenden Ansprüche,
**dadurch gekennzeichnet, dass** das Gehäuse (2) vorderseitig einen umlaufenden Rand (22) aufweist.

4. Füllstandmessgerät (1) nach Anspruch 2,
**dadurch gekennzeichnet, dass** das Dichtorgan (4) in vorderseitiger Richtung durch den Rand (22) abgestützt ist.

5. Füllstandmessgerät (1) nach einem der vorhergehenden Ansprüche,
**dadurch gekennzeichnet, dass** Rückseitig ein Haltering (5) vorgesehen ist.

6. Füllstandmessgerät (1) nach Anspruch 5,
**dadurch gekennzeichnet, dass** der Haltering (5) derart ausgebildet ist, dass er das Dichtorgan (4) rückseitig mit einer Spannkraft beaufschlagt.

7. Füllstandmessgerät (1) nach einem der vorhergehenden Ansprüche,
**dadurch gekennzeichnet, dass** die Messzelle (3) eine kapazitive Messzelle (3) aus keramischem Material ist.
